# FASCICULE DE BREVET EUROPEEN

(11) **EP 3 603 931 B1**
(45) Date de publication et mention de la délivrance du brevet: **23.06.2021**
(21) Numéro de dépôt: 19188755.3
(22) Date de dépôt: 29.07.2019
(51) Int. Cl.: B29C 45/80, B29C 45/76

(54) **SYSTEME DE MOULAGE AVEC UN SYSTEME DE SURVEILLANCE DE L'ALIGNEMENT**
SPRITZGUSSSYSTEM MIT EINEM ÜBERWACHUNGSSYSTEM DER AUSRICHTUNG
MOULDING SYSTEM WITH A SYSTEM FOR MONITORING ALIGNMENT

(30) Priorité: 01.08.2018 FR 1870890
(43) Date de publication de la demande: 05.02.2020
(73) Titulaire: ERMO, 53102 Mayenne Cedex (FR)
(72) Inventeur: GIRAULT, Pascal, 53440 Marcille la Ville (FR); MAUNOURY, Laurent, 53440 Marcille la Ville (FR); DEL NEVO, Maurizio, 53440 Marcille la Ville (FR)
(74) Mandataire: Cabinet Le Guen Maillet

(56) Documents cités:
- WO-A1-2019/075554
- DE-A1-102009 049 733
- JP-A- 2015 139 965
- US-A1- 2014 197 561

## Description

### DOMAINE TECHNIQUE

La présente invention concerne un système de moulage avec un système de surveillance de l'alignement entre les différentes parties constituant le système de moulage.

### ETAT DE LA TECHNIQUE ANTERIEURE

Un système de moulage industriel comporte classiquement un bâti qui est fixe et sur lequel sont montés un moule fixe et un moule mobile. Le moule mobile se met en contact contre le moule fixe de manière à permettre l'injection d'une matière à mouler dans des alvéoles délimitées par le moule fixe et le moule mobile. Après injection et solidification, le moule mobile s'écarte du moule fixe pour libérer les pièces moulées.

Les déplacements fréquents du moule mobile peuvent dérégler l'alignement entre le moule fixe et le moule mobile, ce désalignement peut alors engendrer le moulage de pièces défectueuses et/ou de créer des dégâts sur le moule.

Les documents JP-A-2015 139965, US-A-2014/197561 et DE-A-10 2009 049733 divulguent des systèmes de moulage de l'état de la technique.

### EXPOSE DE L'INVENTION

Un objet de la présente invention est de proposer un système de moulage qui comporte un système de surveillance qui permet de détecter un désalignement entre les moules fixes et mobiles du système de moulage.

A cet effet, est proposé un système de moulage comportant un bâti, un moule fixe fixé au bâti, un premier moule mobile monté mobile en translation sur le bâti entre une position ouverte dans laquelle le premier moule mobile est éloigné du moule fixe et une position fermée dans laquelle le premier moule mobile est contre le moule fixe, et un système de surveillance qui comporte :
- une première surface de référence solidaire du moule fixe et parallèle à la direction de translation du premier moule mobile,
- un premier capteur solidaire du premier moule mobile qui vient en appui contre la première surface de référence, et est configuré pour mesurer une première distance perpendiculairement à la première surface de référence, et
- une unité de contrôle qui est connectée au premier capteur et qui est configurée pour détecter une déviation de la première distance mesurée par le premier capteur par rapport à un premier intervalle de tolérance,
où le système de surveillance comporte un premier système de proximité connecté à l'unité de contrôle et prévu pour détecter une position de mesure qui est une position intermédiaire du premier moule mobile entre la position ouverte et la position fermée, l'unité de contrôle est configurée pour détecter lorsque le premier système de proximité détecte la position de mesure, et l'unité de contrôle est configurée pour détecter la déviation de la première distance entre la position de mesure et la position fermée.

Avantageusement, le premier système de proximité comporte une première marque solidaire du moule fixe et un premier capteur additionnel solidaire du premier moule mobile et connecté à l'unité de contrôle, et la première marque et le premier capteur additionnel sont disposés de manière à ce que le premier capteur additionnel capte la présence de la première marque lorsque le premier moule mobile atteint la position de mesure.

Avantageusement, le système de moulage comporte un autre système de surveillance et les systèmes de surveillance sont répartis à bâbord et à tribord par rapport à la direction de translation et l'unité de contrôle est configurée pour déterminer une valeur de déviation de chaque distance mesurée par un des deux systèmes de surveillance par rapport à la même distance précédemment mesurée et l'unité de contrôle est configurée pour déterminer si le signe de la valeur de déviation est différent pour les deux distances mesurées.

Avantageusement, le système de moulage comporte un deuxième moule mobile monté mobile en translation sur le bâti entre une position ouverte dans laquelle le deuxième moule mobile est éloigné du premier moule mobile et une position fermée dans laquelle le deuxième moule mobile est contre le premier moule mobile, le système de surveillance comporte également une deuxième surface de référence solidaire du deuxième moule mobile et parallèle à la direction de translation du deuxième moule mobile, et un deuxième capteur solidaire du premier moule mobile qui vient en appui contre la deuxième surface de référence, et est configuré pour mesurer une deuxième distance perpendiculairement à la deuxième surface de référence, et l'unité de contrôle est connectée au deuxième capteur et est configurée pour détecter une déviation de la deuxième distance mesurée par le deuxième capteur par rapport à un deuxième intervalle de tolérance.

Avantageusement, le système de moulage comporte un autre système de surveillance avec une autre première surface de référence solidaire du moule fixe et parallèle à la direction de translation du premier moule mobile, une autre deuxième surface de référence solidaire du deuxième moule mobile et parallèle à la direction de translation du deuxième moule mobile, un autre premier capteur solidaire du premier moule mobile et un autre deuxième capteur solidaire du premier moule mobile, la première surface de référence et ladite autre première surface de référence sont disposées à bâbord et à tribord par rapport à la direction de translation, la deuxième surface de référence et ladite autre deuxième surface de référence sont disposées à bâbord et à tribord par rapport à la direction de translation, et l'unité de contrôle est configurée pour déterminer une valeur de déviation de chaque distance mesurée par un premier, respectivement deuxième, capteur des deux systèmes de surveillance par rapport à la même distance précédemment mesurée et l'unité de contrôle est configurée pour déterminer si le signe de la valeur de déviation est différent pour les deux distances mesurées par les deux premiers, respectivement deuxièmes, capteurs.

Avantageusement, le système de surveillance comporte un deuxième système de proximité connecté à l'unité de contrôle et prévu pour détecter une position de mesure qui est une position intermédiaire du deuxième moule mobile entre la position ouverte et la position fermée, l'unité de contrôle est configurée pour détecter lorsque le deuxième système de proximité détecte la position de mesure, et l'unité de contrôle est configurée pour détecter la déviation de la deuxième distance entre la position de mesure et la position fermée.

Avantageusement, le deuxième système de proximité comporte une deuxième marque solidaire du deuxième moule mobile et un deuxième capteur additionnel solidaire du premier moule mobile et connecté à l'unité de contrôle, et la deuxième marque et le deuxième capteur additionnel sont disposés de manière à ce que le deuxième capteur additionnel capte la présence de la deuxième marque lorsque le deuxième moule mobile atteint la position de mesure.

Avantageusement, pour chaque surface de référence, le système de surveillance comporte une surface supplémentaire de référence solidaire du moule qui est solidaire de ladite surface de référence et qui est parallèle à la direction de translation et perpendiculaire à ladite surface de référence, et un capteur supplémentaire solidaire du premier moule mobile et qui vient en appui contre la surface supplémentaire de référence, et est configuré pour mesurer une distance supplémentaire perpendiculairement à la surface supplémentaire de référence, et l'unité de contrôle est connectée au capteur supplémentaire et est configurée pour détecter une déviation de la distance supplémentaire mesurée par le capteur supplémentaire par rapport à un troisième intervalle de tolérance.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une représentation schématique d'un système de moulage selon un premier mode de réalisation de l'invention dans une position ouverte,
[Fig. 2] est une représentation schématique du système de moulage selon le premier mode de réalisation de l'invention dans une position fermée,
[Fig. 3] est une représentation schématique d'un système de moulage selon un deuxième mode de réalisation de l'invention dans une position ouverte,
[Fig. 4] est une représentation schématique du système de moulage selon le deuxième mode de réalisation de l'invention dans une position fermée,
[Fig. 5] est une représentation d'un détail du système de surveillance du système de moulage selon l'invention, et
[Fig. 6] est une vue de dessus d'un système de moulage selon un mode de réalisation particulier de l'invention.

### EXPOSE DETAILLE DE MODES DE REALISATION

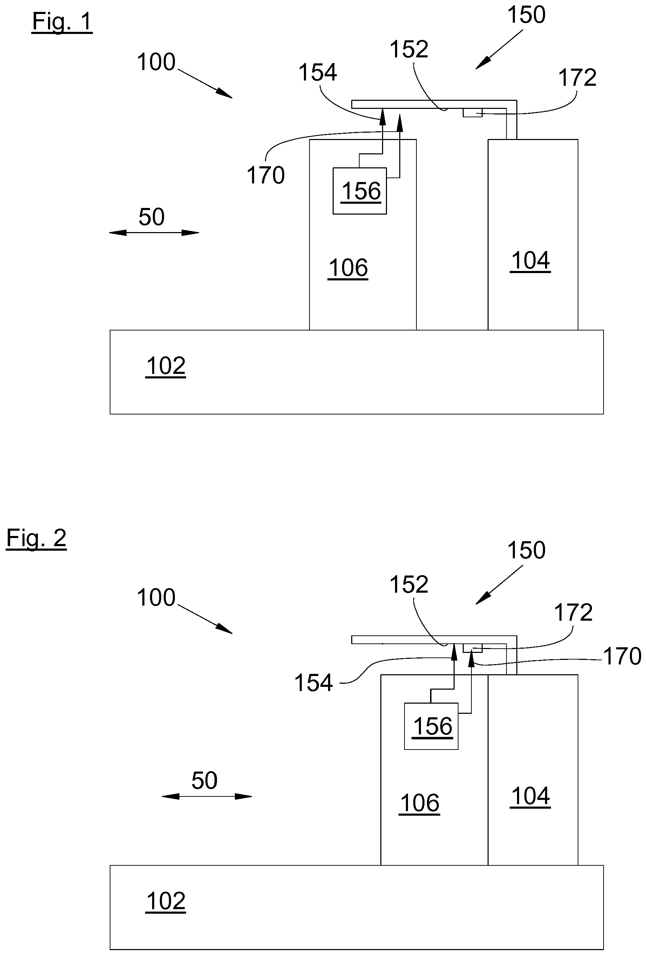

La Fig. 1 et la Fig. 2 montrent un système de moulage 100 selon un premier mode de réalisation de l'invention qui comporte un bâti 102, un moule fixe 104 fixé au bâti 102 et un premier moule mobile 106 monté mobile en translation sur le bâti 102.

Le premier moule mobile 106 est mobile entre une position ouverte (Fig. 1) dans laquelle le premier moule mobile 106 est éloigné du moule fixe 104, en particulier pour retirer les pièces moulées, et une position fermée (Fig. 2) dans laquelle le premier moule mobile 106 est contre le moule fixe 104, en particulier pour mouler les pièces.

Le déplacement du premier moule mobile 106 est assuré par tous systèmes de déplacement connus.

Le système de moulage 100 comporte un système de surveillance 150 qui comporte :
- une première surface de référence 152 solidaire du moule fixe 104 et parallèle à la direction de translation 50 du premier moule mobile 106,
- un premier capteur 154 solidaire du premier moule mobile 106 qui vient en appui contre la première surface de référence 152, et est configuré pour mesurer une première distance perpendiculairement à la première surface de référence 152, et
- une unité de contrôle 156 qui est connectée au premier capteur 154 et qui est configurée pour détecter une déviation de la première distance mesurée par le premier capteur 154 par rapport à un premier intervalle de tolérance.

Le premier capteur 154 est par exemple du type palpeur et à l'initialisation du système de surveillance 150, la référence du premier capteur 154 est fixée, par une mise à zéro par exemple.

Au cours du déplacement du premier moule mobile 106, le premier capteur 154 est en appui contre la première surface de référence 152 et il mesure la première distance entre sa référence et la première surface de référence 152.

La première distance ainsi mesurée est transmise à l'unité de contrôle 156 qui la compare au premier intervalle de tolérance et si la première distance est en dehors de ce premier intervalle de tolérance, l'unité de contrôle 156 déclenche une alarme visuelle et/ou sonore, mais aussi la possibilité de stopper la presse à injecter et/ou d'envoyer un message à un centre de surveillance qui permettra à un technicien de régler le système de moulage 100.

L'unité de contrôle 156 comprend classiquement, reliés par un bus de communication: un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; et au moins une interface de communication 05, permettant par exemple à l'unité de contrôle 156 de communiquer avec le premier capteur et un générateur de message.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits dans la description.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gâte Array » en anglais) ou un ASIC (« Application-Specific Integrated Circuit » en anglais).

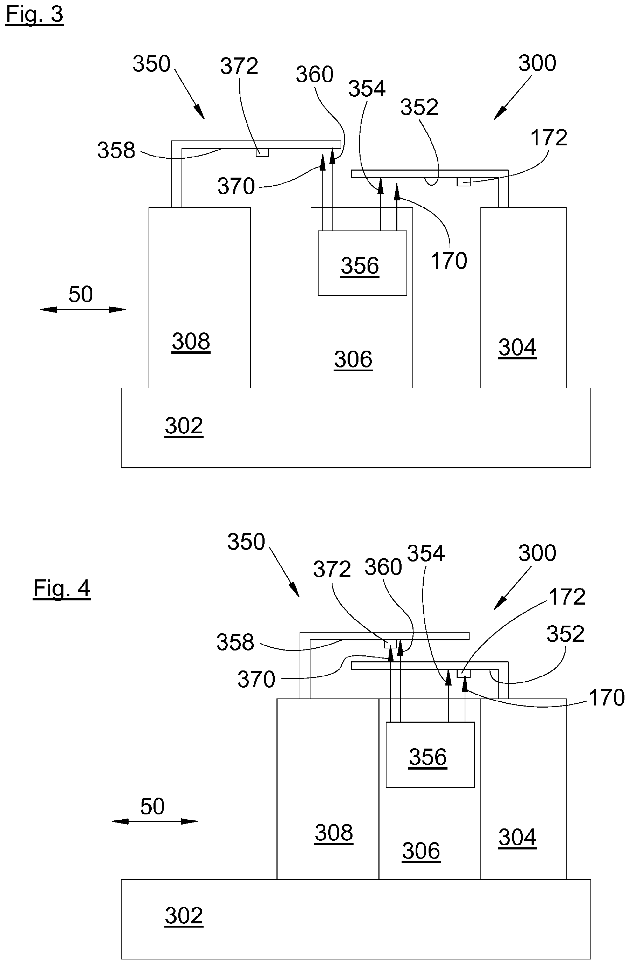

La Fig. 3 et la Fig. 4 montrent un système de moulage 300 selon un deuxième mode de réalisation de l'invention qui comporte un bâti 302, un moule fixe 304 fixé au bâti 302, et un premier moule mobile 306 et un deuxième moule mobile 308 montés mobiles en translation sur le bâti 302. Un tel système de moulage est dit « bi-étage » et il permet de mouler des pièces de chaque côté du premier moule mobile 306.

Le premier moule mobile 306 est mobile entre une position ouverte (Fig. 3) dans laquelle le premier moule mobile 306 est éloigné du moule fixe 304 et une position fermée (Fig. 4) dans laquelle le premier moule mobile 306 est contre le moule fixe 304.

De la même manière, le deuxième moule mobile 308 est mobile entre une position ouverte (Fig. 3) dans laquelle le deuxième moule mobile 308 est éloigné du premier moule mobile 306 et une position fermée (Fig. 4) dans laquelle le deuxième moule mobile 308 est contre le premier moule mobile 306.

Les déplacements du premier moule mobile 306 et du deuxième moule mobile 308 sont assurés par tous systèmes de déplacement connus.

Comme pour le premier mode de réalisation de l'invention, le système de moulage 300 comporte un système de surveillance 350 qui comporte :
- une première surface de référence 352 solidaire du moule fixe 304 et parallèle à la direction de translation 50 des moules mobiles 306 et 308,
- un premier capteur 354 solidaire du premier moule mobile 306 qui vient en appui contre la première surface de référence 352, et est configuré pour mesurer une première distance perpendiculairement à la première surface de référence 352, et
- une unité de contrôle 356 qui est connectée au premier capteur 354 et qui est configurée pour détecter une déviation de la première distance mesurée par le premier capteur 354 par rapport à un premier intervalle de tolérance.

Le système de surveillance 350 comporte également :
- une deuxième surface de référence 358 solidaire du deuxième moule mobile 308 et parallèle à la direction de translation 50 des moules mobiles 306 et 308, et
- un deuxième capteur 360 solidaire du premier moule mobile 306 qui vient en appui contre la deuxième surface de référence 358, et est configuré pour mesurer une deuxième distance perpendiculairement à la deuxième surface de référence 358.

L'unité de contrôle 356 est connectée au deuxième capteur 358 et est configurée pour détecter une déviation de la deuxième distance mesurée par le deuxième capteur 358 par rapport à un deuxième intervalle de tolérance.

Comme précédemment, chaque capteur 354, 360 est par exemple du type palpeur et à l'initialisation du système de surveillance 350, la référence du capteur 354, 360 est fixée, par une mise à zéro par exemple.

Au cours du déplacement des moules mobiles 306 et 308, le capteur 354, 360 associé est en appui contre la surface de référence 352, 358 correspondante et il mesure la distance entre sa référence et la surface de référence 352, 358.

Chaque distance ainsi mesurée est transmise à l'unité de contrôle 356 qui la compare à l'intervalle de tolérance correspondant et si la distance est en dehors de cet intervalle de tolérance, l'unité de contrôle 356 déclenche une alarme comme par exemple l'envoi d'un message à un centre de surveillance qui permettra à un technicien de régler le système de moulage 300.

Dans la mesure où le déplacement d'un moule mobile 106, 306, 308 est relativement long, il n'est pas nécessaire de scruter la déviation de la distance sur tout le déplacement mais uniquement à partir d'une position particulière du moule mobile 106, 306, 308, dite position de mesure. Ainsi, la surveillance de la déviation s'effectue à partir du moment où le moule mobile 106, 306, 308 atteint la position de mesure qui est une position intermédiaire entre la position ouverte et la position fermée. La position de mesure est généralement une position proche de la position fermée ou d'une position d'alignement critique.

Dans le premier mode de réalisation, le système de surveillance 150, 350 comporte un premier système de proximité connecté à l'unité de contrôle 156, 356 et prévu pour détecter la position de mesure du premier moule mobile 106, 306 et la surveillance de la déviation de la première distance s'effectue ainsi entre la position de mesure et la position fermée. L'unité de contrôle 156, 356 est alors configurée pour détecter lorsque le premier système de proximité détecte la position de mesure, et pour détecter la déviation de la première distance entre la position de mesure et la position fermée du premier moule mobile 106, 306.

Dans le premier mode de réalisation, le premier système de proximité comporte un premier capteur additionnel 170 solidaire du premier moule mobile 106 et connecté à l'unité de contrôle 156 qui détecte lorsque le premier moule mobile 106 atteint la position de mesure en fonction des informations délivrées par le premier capteur additionnel 170. Lorsque l'unité de contrôle 156 détecte que la position de mesure est atteinte, elle prend alors en compte la première distance mesurée par le premier capteur 154 pour la comparer au premier intervalle.

Dans le premier mode de réalisation de l'invention, le premier système de proximité comporte une première marque 172 solidaire du moule fixe 104 et le premier capteur additionnel 170. La première marque 172 et le premier capteur additionnel 170 sont disposés de manière à ce que le premier capteur additionnel 170 capte la présence de la première marque 172 lorsque le premier moule mobile 106 atteint la position de mesure.

La position de mesure peut être réglée selon les caractéristiques du système de moulage 100. Selon un mode de réalisation particulier, la position de mesure est par exemple à environ 15 mm de la position fermée.

Dans le deuxième mode de réalisation, le système de surveillance 350 comporte un deuxième système de proximité connecté à l'unité de contrôle 356 et prévu pour détecter la position de mesure du deuxième moule 308 et la surveillance de la déviation de la deuxième distance s'effectue ainsi entre la position de mesure et la position fermée. L'unité de contrôle 356 est alors configurée pour détecter lorsque le deuxième système de proximité détecte la position de mesure, et pour détecter la déviation de la deuxième distance entre la position de mesure et la position fermée du deuxième moule mobile 308.

Dans le deuxième mode de réalisation, le deuxième système de proximité comporte un deuxième capteur additionnel 370 solidaire du premier moule mobile 306 et connecté à l'unité de contrôle 356 qui détecte lorsque le deuxième moule mobile 308 atteint la position de mesure en fonction des informations délivrées par le deuxième capteur additionnel 370. Lorsque l'unité de contrôle 356 détecte que la position de mesure est atteinte, elle prend alors en compte la deuxième distance mesurée par le deuxième capteur 354 pour la comparer au deuxième intervalle.

Dans le deuxième mode de réalisation de l'invention, le deuxième système de proximité comporte ainsi en outre une deuxième marque 372 solidaire du deuxième moule mobile 308 et le deuxième capteur additionnel 370. La deuxième marque 372 et le deuxième capteur additionnel 370 sont disposés de manière à ce que le deuxième capteur additionnel 370 capte la présence de la deuxième marque 372 lorsque le deuxième moule mobile 308 atteint la position de mesure.

Comme précédemment, La position de mesure peut être réglée selon les caractéristiques du système de moulage 300. Selon un mode de réalisation particulier, la position de mesure est par exemple à environ 15 mm de la position fermée.

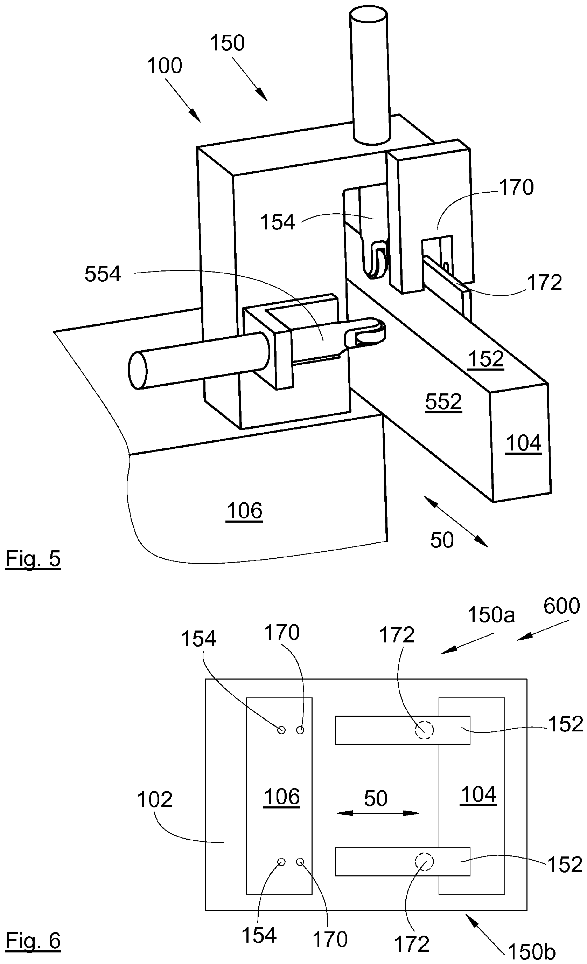

La Fig. 5 montre une variante qui est plus particulièrement décrite dans le cas du premier mode de réalisation, mais elle s'applique de la même manière au deuxième mode de réalisation. Dans cette variante, une déviation est mesurée selon deux directions orthogonales, à savoir par rapport à la première surface de référence 152 et par rapport à une première surface supplémentaire de référence 552 solidaire du moule fixe 104, et qui est parallèle à la direction de translation 50 et perpendiculaire à la première surface de référence 152.

Le système de surveillance 150 comporte alors la première surface supplémentaire de référence 552 et un premier capteur supplémentaire 554 solidaire du premier moule mobile 106 qui vient en appui contre la première surface supplémentaire de référence 552, et est configuré pour mesurer une première distance supplémentaire perpendiculairement à la première surface supplémentaire de référence 552.

L'unité de contrôle 156 est connectée au premier capteur supplémentaire 554 et est configurée pour détecter une déviation de la première distance supplémentaire mesurée par le premier capteur supplémentaire 554 par rapport à un troisième intervalle de tolérance.

Le premier capteur supplémentaire 554 est par exemple du type palpeur et à l'initialisation du système de surveillance 150, la référence du premier capteur supplémentaire 554 est fixée, par une mise à zéro par exemple.

Au cours du déplacement du premier moule mobile 106, le premier capteur supplémentaire 554 est en appui contre la première surface supplémentaire de référence 552 et il mesure la première distance supplémentaire entre sa référence et la première surface supplémentaire de référence 552.

Chaque distance ainsi mesurée est transmise à l'unité de contrôle 156 qui la compare à l'intervalle de tolérance correspondant et si la distance est en dehors de cet intervalle de tolérance, l'unité de contrôle 156 déclenche une alarme visuelle et/ou sonore, mais aussi la possibilité de stopper la presse à injecter et/ou d'envoyer un message à un centre de surveillance qui permettra à un technicien de régler le système de moulage 100.

Dans le cas du deuxième mode de réalisation, une telle surface supplémentaire et un tel capteur supplémentaire peuvent être mis en place au niveau du deuxième moule mobile 308.

Ainsi d'une manière générale, pour chaque surface de référence 152, 352, 358, le système de surveillance 150, 350 comporte une surface supplémentaire de référence 552 solidaire du moule 104, 304, 308 qui est solidaire de ladite surface de référence 152, 352, 358 et qui est parallèle à la direction de translation 50 et perpendiculaire à ladite surface de référence 152, 352, 358, et un capteur supplémentaire 554 solidaire du premier moule mobile 106, 306 et qui vient en appui contre la surface supplémentaire de référence 552, et est configuré pour mesurer une distance supplémentaire perpendiculairement à la surface supplémentaire de référence 552, et l'unité de contrôle 156, 356 est connectée au capteur supplémentaire 554 et est configurée pour détecter une déviation de la distance supplémentaire mesurée par le capteur supplémentaire 554 par rapport à un troisième intervalle de tolérance.

Bien sûr, la prise en compte des mesures du capteur supplémentaire 554 est soumise à la détection de la marque 172, 372 par le capteur additionnel 170, 370.

Dans le mode de réalisation de l'invention présenté à la Fig. 5, le premier capteur additionnel 170 prend la forme d'un capteur fourche et la première marque 172 prend la forme d'un mur qui est prévu pour passer dans la fourche dudit premier capteur additionnel 170.

Les différentes données issues de capteurs peuvent être enregistrées dans des fichiers qu'un technicien peut consulter dans le cadre de la maintenance du système de moulage.

La Fig. 6 montre un système de moulage 600 correspondant à un mode de réalisation particulier du premier mode de réalisation (Figs. 1 et 2), mais cette variante s'applique de la même manière au deuxième mode de réalisation (Figs. 3 et 4). Cet arrangement permet également une détection d'un défaut d'orientation angulaire du moule mobile 106 par rapport au moule fixe 104.

Le système de moulage 600 comporte deux systèmes de surveillance 150a-b qui sont répartis à bâbord et à tribord par rapport à la direction de translation 50, c'est-à-dire dans la profondeur des moules 104 et 106.

Comme décrit ci-dessus, chaque système de surveillance 150a-b comporte une première surface de référence 152 solidaire du moule fixe 104 et un premier capteur 154 solidaire du premier moule mobile 106 et configuré pour mesurer une première distance perpendiculairement à la première surface de référence 152. L'unité de contrôle 156 peut être commune aux deux systèmes de surveillance 150a-b ou chaque unité de contrôle 156 peut être en liaison avec une unité de contrôle supérieure qui reçoit des informations de chaque unité de contrôle 156.

Pour chaque distance mesurée par un des deux systèmes de surveillance 150a-b, l'unité de contrôle 156 associée ou l'unité de contrôle supérieure détermine une valeur de déviation de ladite distance mesurée par rapport à la même distance précédemment mesurée et mise par exemple en mémoire lors de la précédente mesure.

Ainsi, pour le premier capteur 154 du premier système de surveillance 150a, l'unité de contrôle 156 associée ou l'unité de contrôle supérieure détermine une valeur de déviation de ladite distance mesurée par ledit premier capteur par rapport à la même distance précédemment mesurée et de la même manière pour le premier capteur 154 du deuxième système de surveillance 150b, l'unité de contrôle 156 associée ou l'unité de contrôle supérieure détermine une valeur de déviation de ladite distance mesurée par ledit premier capteur par rapport à la même distance précédemment mesurée.

L'unité de contrôle 156 associée ou l'unité de contrôle supérieure peut alors déterminer si le signe (positif ou négatif) de la valeur de déviation est le même ou est différent pour les deux distances mesurées. Un signe différent est significatif d'une rotation du moule mobile 106 par rapport au moule fixe 104.

Dans ce cas, l'unité de contrôle 156 ou l'unité de contrôle supérieure déclenche une alarme visuelle et/ou sonore, mais aussi la possibilité de stopper la presse à injecter et/ou d'envoyer un message à un centre de surveillance qui permettra à un technicien de régler le système de moulage 100.

La même variante peut s'appliquer au mode de réalisation des Figs. 3 et 4.

Le système de moulage 300 comporte alors un autre système de surveillance avec une autre première surface de référence solidaire du moule fixe 304 et parallèle à la direction de translation 50 du premier moule mobile 306, et une autre deuxième surface de référence solidaire du deuxième moule mobile 308 et parallèle à la direction de translation 50 du deuxième moule mobile 308.

La première surface de référence 352 et ladite autre première surface de référence sont disposées à bâbord et à tribord par rapport à la direction de translation 50, et la deuxième surface de référence 358 et ladite autre deuxième surface de référence sont disposées à bâbord et à tribord par rapport à la direction de translation 50.

Pour chaque autre surface de référence, ledit autre système de surveillance comporte un autre premier capteur solidaire du premier moule mobile 306 et un autre deuxième capteur solidaire du premier moule mobile 306, où chacun est configuré pour mesurer une distance perpendiculairement à la surface de référence associée.

Comme précédemment, pour chaque distance mesurée par un premier ou deuxième capteur des deux systèmes de surveillance, l'unité de contrôle 356 associée ou l'unité de contrôle supérieure détermine une valeur de déviation de ladite distance mesurée par rapport à la même distance précédemment mesurée.

C'est-à-dire que l'unité de contrôle 356 est configurée pour déterminer une valeur de déviation de chaque distance mesurée par un premier, respectivement deuxième, capteur des deux systèmes de surveillance par rapport à la même distance précédemment mesurée et que l'unité de contrôle 356 est configurée pour déterminer si le signe de la valeur de déviation est différent pour les deux distances mesurées par les deux premiers, respectivement deuxièmes, capteurs.

Ainsi, pour le premier capteur 354 du premier système de surveillance 350, l'unité de contrôle 356 associée ou l'unité de contrôle supérieure détermine une valeur de déviation de ladite distance mesurée par ledit premier capteur par rapport à la même distance précédemment mesurée et de la même manière pour le premier capteur du deuxième système de surveillance, l'unité de contrôle 356 associée ou l'unité de contrôle supérieure détermine une valeur de déviation de ladite distance mesurée par ledit premier capteur par rapport à la même distance précédemment mesurée. Et pour le deuxième capteur 360 du premier système de surveillance 350, l'unité de contrôle 356 associée ou l'unité de contrôle supérieure détermine une valeur de déviation de ladite distance mesurée par ledit deuxième capteur par rapport à la même distance précédemment mesurée et de la même manière pour le deuxième capteur du deuxième système de surveillance, l'unité de contrôle 356 associée ou l'unité de contrôle supérieure détermine une valeur de déviation de ladite distance mesurée par ledit deuxième capteur par rapport à la même distance précédemment mesurée.

L'unité de contrôle 356 associée ou l'unité de contrôle supérieure peut alors déterminer si le signe (positif ou négatif) de la valeur de déviation est le même ou est différent pour les deux distances mesurées par les premiers, respectivement deuxièmes, capteurs. Un signe différent pour les premiers capteurs est significatif d'une rotation du premier moule mobile 306 par rapport au moule fixe 304 et un signe différent pour les deuxièmes capteurs est significatif d'une rotation du deuxième moule mobile 308 par rapport au premier moule mobile 306.

Dans le cas d'au moins un signe différent, l'unité de contrôle 356 ou l'unité de contrôle supérieure déclenche une alarme visuelle et/ou sonore, mais aussi la possibilité de stopper la presse à injecter et/ou d'envoyer un message à un centre de surveillance qui permettra à un technicien de régler le système de moulage.

## Revendications

1. Système de moulage (100, 300) comportant un bâti (102, 302), un moule fixe (104, 304) fixé au bâti (102, 302), un premier moule mobile (106, 306) monté mobile en translation sur le bâti (102, 302) entre une position ouverte dans laquelle le premier moule mobile (106, 306) est éloigné du moule fixe (104, 304) et une position fermée dans laquelle le premier moule mobile (106, 306) est contre le moule fixe (104, 304), et un système de surveillance (150, 350) qui comporte :
- une première surface de référence (152, 352) solidaire du moule fixe (104, 304) et parallèle à la direction de translation (50) du premier moule mobile (106, 306),
- un premier capteur (154, 354) solidaire du premier moule mobile (106, 306) qui vient en appui contre la première surface de référence (152, 352), et est configuré pour mesurer une première distance perpendiculairement à la première surface de référence (152, 352), et
- une unité de contrôle (156, 356) qui est connectée au premier capteur (154) et qui est configurée pour détecter une déviation de la première distance mesurée par le premier capteur (154) par rapport à un premier intervalle de tolérance,
le système de moulage (100, 300) étant **caractérisé en ce que** le système de surveillance (150, 350) comporte un premier système de proximité connecté à l'unité de contrôle (156, 356) et prévu pour détecter une position de mesure qui est une position intermédiaire du premier moule mobile (106, 306) entre la position ouverte et la position fermée, **en ce que** l'unité de contrôle (156, 356) est configurée pour détecter lorsque le premier système de proximité détecte la position de mesure, et **en ce que** l'unité de contrôle (156, 356) est configurée pour détecter la déviation de la première distance entre la position de mesure et la position fermée.

2. Système de moulage (100, 300) selon la revendication 1, **caractérisé en ce que** le premier système de proximité comporte une première marque (172) solidaire du moule fixe (104) et un premier capteur additionnel (170) solidaire du premier moule mobile (106) et connecté à l'unité de contrôle (156), et **en ce que** la première marque (172) et le premier capteur additionnel (170) sont disposés de manière à ce que le premier capteur additionnel (170) capte la présence de la première marque (172) lorsque le premier moule mobile (106) atteint la position de mesure.

3. Système de moulage (100) selon l'une des revendications 1 ou 2, **caractérisé en ce qu'**il comporte un autre système de surveillance (150a-b) et **en ce que** les systèmes de surveillance (150a-b) sont répartis à bâbord et à tribord par rapport à la direction de translation (50) et **en ce que** l'unité de contrôle (156) est configurée pour déterminer une valeur de déviation de chaque distance mesurée par un des deux systèmes de surveillance (150a-b) par rapport à la même distance précédemment mesurée et **en ce que** l'unité de contrôle (156) est configurée pour déterminer si le signe de la valeur de déviation est différent pour les deux distances mesurées.

4. Système de moulage (300) selon l'une des revendications 1 ou 2, **caractérisé en ce qu'**il comporte un deuxième moule mobile (308) monté mobile en translation sur le bâti (302) entre une position ouverte dans laquelle le deuxième moule mobile (308) est éloigné du premier moule mobile (306) et une position fermée dans laquelle le deuxième moule mobile (308) est contre le premier moule mobile (306), **en ce que** le système de surveillance (350) comporte également une deuxième surface de référence (358) solidaire du deuxième moule mobile (308) et parallèle à la direction de translation (50) du deuxième moule mobile (308), et un deuxième capteur (360) solidaire du premier moule mobile (306) qui vient en appui contre la deuxième surface de référence (358), et est configuré pour mesurer une deuxième distance perpendiculairement à la deuxième surface de référence (358), et **en ce que** l'unité de contrôle (356) est connectée au deuxième capteur (358) et est configurée pour détecter une déviation de la deuxième distance mesurée par le deuxième capteur (358) par rapport à un deuxième intervalle de tolérance.

5. Système de moulage (300) selon la revendication 4, **caractérisé en ce qu'**il comporte un autre système de surveillance avec une autre première surface de référence solidaire du moule fixe (304) et parallèle à la direction de translation (50) du premier moule mobile (306), une autre deuxième surface de référence solidaire du deuxième moule mobile (308) et parallèle à la direction de translation (50) du deuxième moule mobile (308), un autre premier capteur solidaire du premier moule mobile (306) et un autre deuxième capteur solidaire du premier moule mobile (306), **en ce que** la première surface de référence (352) et ladite autre première surface de référence sont disposées à bâbord et à tribord par rapport à la direction de translation (50), **en ce que** la deuxième surface de référence (358) et ladite autre deuxième surface de référence sont disposées à bâbord et à tribord par rapport à la direction de translation (50), **en ce que** l'unité de contrôle (356) est configurée pour déterminer une valeur de déviation de chaque distance mesurée par un premier, respectivement deuxième, capteur des deux systèmes de surveillance par rapport à la même distance précédemment mesurée et **en ce que** l'unité de contrôle (356) est configurée pour déterminer si le signe de la valeur de déviation est différent pour les deux distances mesurées par les deux premiers, respectivement deuxièmes, capteurs.

6. Système de moulage (300) selon l'une des revendications 4 ou 5, **caractérisé en ce que** le système de surveillance (350) comporte un deuxième système de proximité connecté à l'unité de contrôle (356) et prévu pour détecter une position de mesure qui est une position intermédiaire du deuxième moule mobile (308) entre la position ouverte et la position fermée, **en ce que** l'unité de contrôle (356) est configurée pour détecter lorsque le deuxième système de proximité détecte la position de mesure, et **en ce que** l'unité de contrôle (356) est configurée pour détecter la déviation de la deuxième distance entre la position de mesure et la position fermée.

7. Système de moulage (300) selon la revendication 6, **caractérisé en ce que** le deuxième système de proximité comporte une deuxième marque (372) solidaire du deuxième moule mobile (308) et un deuxième capteur additionnel (370) solidaire du premier moule mobile (306) et connecté à l'unité de contrôle (356), et **en ce que** la deuxième marque (372) et le deuxième capteur additionnel (370) sont disposés de manière à ce que le deuxième capteur additionnel (370) capte la présence de la deuxième marque (372) lorsque le deuxième moule mobile (308) atteint la position de mesure.

8. Système de moulage (100, 300) selon l'une des revendications 1 à 7, **caractérisé en ce que**, pour chaque surface de référence (152, 352, 358), le système de surveillance (150, 350) comporte une surface supplémentaire de référence (552) solidaire du moule (104, 304, 308) qui est solidaire de ladite surface de référence (152, 352, 358) et qui est parallèle à la direction de translation (50) et perpendiculaire à ladite surface de référence (152, 352, 358), et un capteur supplémentaire (554) solidaire du premier moule mobile (106, 306) et qui vient en appui contre la surface supplémentaire de référence (552), et est configuré pour mesurer une distance supplémentaire perpendiculairement à la surface supplémentaire de référence (552), et **en ce que** l'unité de contrôle (156, 356) est connectée au capteur supplémentaire (554) et est configurée pour détecter une déviation de la distance supplémentaire mesurée par le capteur supplémentaire (554) par rapport à un troisième intervalle de tolérance.

## Patentansprüche

1. Formungssystem (100, 300) aufweisend ein Gestell (102, 302), eine feste Form (104, 304), die am Gestell (102, 302) befestigt ist, eine erste bewegliche Form (106, 306), die am Gestell (102, 302) zwischen einer offenen Position, in welcher die erste bewegliche Form (106, 306) von der festen Form (104, 304) entfernt ist, und einer geschlossenen Position, in welcher die erste bewegliche Form (106, 306) gegen die feste Form (104, 304) anliegt, translatorisch beweglich angebracht ist, und ein Überwachungssystem (150, 350), das Folgendes aufweist:
- eine erste Referenzfläche (152, 352), die mit der festen Form (104, 304) fest verbunden ist und parallel zur Translationsrichtung (50) der ersten beweglichen Form (106, 306) verläuft,
- einen ersten Sensor (154, 354), der mit der ersten beweglichen Form (106, 306) fest verbunden ist, der gegen die erste Referenzfläche (152, 352) in Anlage kommt, und dazu ausgebildet ist, einen ersten Abstand senkrecht zur ersten Referenzfläche (152, 352) zu messen, und
- eine Steuereinheit (156, 356), die an den ersten Sensor (154) angeschlossen ist und dazu ausgebildet ist, eine Abweichung des ersten Abstands, der vom ersten Sensor (154) gemessen wird, im Verhältnis zu einem ersten Toleranzintervall festzustellen,
wobei das Formungssystem (100, 300) **dadurch gekennzeichnet ist, dass** das Überwachungssystem (150, 350) ein erstes Näherungssystem aufweist, das an die Steuereinheit (156, 356) angeschlossen und dafür vorgesehen ist, eine Messposition festzustellen, die eine Zwischenposition der ersten beweglichen Form (106, 306) zwischen der offenen Position und der geschlossenen Position ist, dadurch, dass die Steuereinheit (156, 356) dazu ausgebildet ist, festzustellen, wenn das erste Näherungssystem die Messposition feststellt, und dadurch, dass die Steuereinheit (156, 356) dazu ausgebildet ist, die Abweichung des ersten Abstands zwischen der Messposition und der geschlossenen Position festzustellen.

2. Formungssystem (100, 300) nach Anspruch 1, **dadurch gekennzeichnet, dass** das erste Näherungssystem eine erste Marke (172), die mit der festen Form (104) fest verbunden ist, und einen ersten Zusatzsensor (170), der mit der ersten beweglichen Form (106) fest verbunden ist und an die Steuereinheit (156) angeschlossen ist, aufweist, und dadurch, dass die erste Marke (172) und der erste Zusatzsensor (170) so angeordnet sind, dass der erste Zusatzsensor (170) das Vorhandensein der ersten Marke (172) erfasst, wenn die erste bewegliche Form (106) die Messposition erreicht.

3. Formungssystem (100) nach einem der Ansprüche 1 oder 2, **dadurch gekennzeichnet, dass** es ein anderes Überwachungssystem (150a-b) aufweist, und dadurch, dass die Überwachungssysteme (150a-b) an Backbord und Steuerbord im Verhältnis zur Translationsrichtung (50) verteilt sind, und dadurch, dass die Steuereinheit (156) dazu ausgebildet ist, einen Abweichungswert jedes Abstands, der von einem der zwei Überwachungssysteme (150a-b) gemessen wird, im Verhältnis zu demselben zuvor gemessenen Abstand zu bestimmen, und dadurch, dass die Steuereinheit (156) dazu ausgebildet ist, zu bestimmen, ob sich das Vorzeichen des Abweichungswerts für die zwei gemessenen Abstände unterscheidet.

4. Formungssystem (300) nach einem der Ansprüche 1 oder 2, **dadurch gekennzeichnet, dass** es eine zweite bewegliche Form (308) aufweist, die am Gestell (302) zwischen einer offenen Position, in welcher die zweite bewegliche Form (308) von der ersten beweglichen Form (306) entfernt ist, und einer geschlossenen Position, in welcher die zweite bewegliche Form (308) gegen die erste bewegliche Form (306) anliegt, translatorisch beweglich angebracht ist, dadurch, dass das Überwachungssystem (350) ebenfalls eine zweite Referenzfläche (358), die mit der zweiten beweglichen Form (308) fest verbunden ist und parallel zur Translationsrichtung (50) der zweiten beweglichen Form (308) verläuft, und einen zweiten Sensor (360), der mit der ersten beweglichen Form (306) fest verbunden ist, der gegen die zweite Referenzfläche (358) in Anlage kommt und dazu ausgebildet ist, einen zweiten Abstand senkrecht zur zweiten Referenzfläche (358) zu messen, und dadurch, dass die Steuereinheit (356) an den zweiten Sensor (358) angeschlossen ist und dazu ausgebildet ist, eine Abweichung des zweiten Abstands, der vom zweiten Sensor (358) gemessen wird, im Verhältnis zu einem zweiten Toleranzintervall festzustellen.

5. Formungssystem (300) nach Anspruch 4, **dadurch gekennzeichnet, dass** es ein anderes Überwachungssystem mit einer anderen ersten Referenzfläche, die mit der festen Form (304) fest verbunden ist und parallel zur Translationsrichtung (50) der ersten beweglichen Form (306) verläuft, eine andere zweite Referenzfläche, die mit der zweiten beweglichen Form (308) fest verbunden ist und parallel zur Translationsrichtung (50) der zweiten beweglichen Form (308) verläuft, einen anderen ersten Sensor, der mit der ersten beweglichen Form (306) fest verbunden ist, und einen anderen zweiten Sensor, der mit der ersten beweglichen Form (306) fest verbunden ist, aufweist, dadurch, dass die erste Referenzfläche (352) und die andere erste Referenzfläche an Backbord und Steuerbord im Verhältnis zur Translationsrichtung (50) angeordnet sind, dadurch, dass die zweite Referenzfläche (358) und die andere zweite Referenzfläche an Backbord und Steuerbord im Verhältnis zur Translationsrichtung (50) angeordnet sind, dadurch, dass die Steuereinheit (356) dazu ausgebildet ist, einen Abweichungswert jedes Abstands, der von einem ersten beziehungsweise zweiten Sensor der zwei Überwachungssysteme gemessen wird, im Verhältnis zu demselben zuvor gemessenen Abstand zu bestimmen und dadurch, dass die Steuereinheit (356) dazu ausgebildet ist, zu bestimmen, ob sich das Vorzeichen des Abweichungswerts für die zwei Abstände, die von den zwei ersten beziehungsweise zweiten Sensoren gemessen werden, unterscheidet.

6. Formungssystem (300) nach einem der Ansprüche 4 oder 5, **dadurch gekennzeichnet, dass** das Überwachungssystem (350) ein zweites Näherungssystem aufweist, das an die Steuereinheit (356) angeschlossen und dafür vorgesehen ist, eine Messposition festzustellen, die eine Zwischenposition der zweiten beweglichen Form (308) zwischen der offenen Position und der geschlossenen Position ist, dadurch, dass die Steuereinheit (356) dazu ausgebildet ist, festzustellen, wenn das zweite Näherungssystem die Messposition feststellt, und dadurch, dass die Steuereinheit (356) dazu ausgebildet ist, die Abweichung des zweiten Abstands zwischen der Messposition und der geschlossenen Position festzustellen.

7. Formungssystem (300) nach Anspruch 6, **dadurch gekennzeichnet, dass** das zweite Näherungssystem eine zweite Marke (372), die mit der zweiten beweglichen Form (308) fest verbunden ist, und einen zweiten Zusatzsensor (370), der mit der ersten beweglichen Form (306) fest verbunden ist und an die Steuereinheit (356) angeschlossen ist, aufweist, und dadurch, dass die zweite Marke (372) und der zweite Zusatzsensor (370) so angeordnet sind, dass der zweite Zusatzsensor (370) das Vorhandensein der zweiten Marke (372) erfasst, wenn die zweite bewegliche Form (308) die Messposition erreicht.

8. Formungssystem (100, 300) nach einem der Ansprüche 1 bis 7, **dadurch gekennzeichnet, dass** für jede Referenzfläche (152, 352, 358) das Überwachungssystem (150, 350) eine zusätzliche Referenzfläche (552) aufweist, die mit der Form (104, 304, 308) fest verbunden ist, die mit der Referenzfläche (152, 352, 358) fest verbunden ist, und die parallel zur Translationsrichtung (50) und senkrecht zur Referenzfläche (152, 352, 358) verläuft, und einen zusätzlichen Sensor (554), der mit der ersten beweglichen Form (106, 306) fest verbunden ist und der gegen die zusätzliche Referenzfläche (552) in Anlage kommt und dazu ausgebildet ist, einen zusätzlichen Abstand senkrecht zur zusätzlichen Referenzfläche (552) zu messen, und dadurch, dass die Steuereinheit (156, 356) an den zusätzlichen Sensor (554) angeschlossen ist und dazu ausgebildet ist, eine Abweichung des zusätzlichen Abstands, der vom zusätzlichen Sensor (554) gemessen wird, im Verhältnis zu einem dritten Toleranzintervall festzustellen.

## Claims

1. Moulding system (100, 300) comprising a structure (102, 302), a fixed mould (104, 304) fixed to the structure (102, 302), a first mobile mould (106, 306) mounted with translational mobility on the structure (102, 302) between an open position in which the first mobile mould (106, 306) is away from the fixed mould (104, 304) and a closed position in which the first mobile mould (106, 306) is against the fixed mould (104, 304), and a monitoring system (150, 350) which comprises :
- a first reference surface (152, 352) solidly fixed to the fixed mould (104, 304) and parallel to the direction of translational movement (50) of the first mobile mould (106, 306),
- a first sensor (154, 354) solidly fixed to the first mobile mould (106, 306) which comes to bear against the first reference surface (152, 352) and is configured to measure a first distance perpendicular to the first reference surface (152, 352), and
- a control unit (156, 356) which is connected to the first sensor (154) and which is configured to detect a deviation in the first distance measured by the first sensor (154) with respect to a first tolerance band,
the moulding system (100, 300) being **characterized in that** the monitoring system (150, 350) comprises a first proximity system connected to the control unit (156, 356) and intended to detect a measurement position which is an intermediate position of the first mobile mould (106, 306) between the open position and the closed position, and **in that** the control unit (156, 356) is configured to detect when the first proximity system detects the measurement position, and **in that** the control unit (156, 356) is configured to detect the deviation in the first distance between the measurement position and the closed position.

2. Moulding system (100, 300) according to Claim 1, **characterized in that** the first proximity system comprises a first mark (172) solidly fixed to the fixed mould (104) and a first additional sensor (170) solidly fixed to the first mobile mould (106) and connected to the control unit (156), and **in that** the first mark (172) and the first additional sensor (170) are arranged in such a way that the first additional sensor (170) senses the presence of the first mark (172) when the first mobile mould (106) reaches the measurement position.

3. Moulding system (100) according to one of Claims 1 or 2, **characterized in that** it comprises another monitoring system (150a-b), and **in that** the monitoring systems (150a-b) are disposed on the port and starboard sides in relation to the direction of the translation (50) and **in that** the control unit (156) is configured to determine a deviation value of each distance measured by one of the two monitoring systems (150a-b) from the same distance previously measured and **in that** the control unit (156) is configured to determine whether the sign of the deviation value is different for the two measured distances.

4. Moulding system (300) according to one of Claims 1 or 2, **characterized in that** it comprises a second mobile mould (308) mounted with translational mobility on the structure (302) between an open position in which the second mobile mould (308) is away from the first mobile mould (306) and a closed position in which the second mobile mould (308) is against the first mobile mould (306), **in that** the monitoring system (350) also comprises a second reference surface (358) solidly fixed to the second mobile mould (308) and parallel to the direction of translational movement (50) of the second mobile mould (308), and a second sensor (360) solidly fixed to the first mobile mould (306) which comes to bear against the second reference surface (358) and is configured to measure a second distance perpendicular to the second reference surface (358), and **in that** the control unit (356) is connected to the second sensor (358) and is configured to detect a deviation in the second distance measured by the second sensor (358) with respect to a second tolerance band.

5. Moulding system (300) according to Claim 4, **characterized in that** it comprises another monitoring system with another first reference surface solidly fixed to the fixed mould (304) and parallel to the direction of translation (50) of the first mobile mould (306), another second reference surface solidly fixed to the second mobile mould (308) and parallel to the direction of translation (50) of the second mobile mould (308), another first sensor solidly fixed to the first mobile mould (306) and another second sensor solidly fixed to the first mobile mould (306), **in that** the first reference surface (352) and the said other first reference surface are located on the port and starboard sides in relation to the direction of translation (50), **in that** the second reference surface (258) and the said other second reference surface are disposed on the port and starboard sides in relation to the direction of translation (50), **in that** the control unit (356) is configured to determine a deviation value of each distance measured by a first, respectively second, sensor of the two monitoring systems relative to the same distance previously measured and in taht the control unit (356) is configured to determine if the sign of the deviation value is different for the two distances measured by both first, respectively second, sensors.

6. Moulding system (300) according to one of Claims 4 or 5, **characterized in that** the monitoring system (350) comprises a second proximity system connected to the control unit (356) and intended to detect a measurement position which is an intermediate position of the second mobile mould (308) between the open position and the closed position, **in that** the control unit (356) is configured to detect when the second proximity system detects the measurement position, and **in that** the control unit (356) is configured to detect the deviation in the second distance between the measurement position and the closed position.

7. Moulding system (300) according to Claim 6, **characterized in that** the second proximity system comprises a second mark (372) solidly fixed to the second mobile mould (308) and a second additional sensor (370) solidly fixed to the first mobile mould (306) and connected to the control unit (356), and **in that** the second mark (372) and the second additional sensor (370) are positioned in such a way that the second additional sensor (370) senses the presence of the second mark (372) when the second mobile mould (308) reaches the measurement position.

8. Moulding system (100, 300) according to one of Claims 1 to 7, **characterized in that**, for each reference surface (152, 352, 358), the monitoring system (150, 350) comprises a supplementary reference surface (552) solidly fixed to the mould (104, 304, 308) which is solidly fixed to the said reference surface (152, 352, 358) and which is parallel to the direction of translational movement (50) and perpendicular to the said reference surface (152, 352, 358), and a supplementary sensor (554) solidly fixed to the first mobile mould (106, 306) and which comes to bear against the supplementary reference surface (552) and is configured to measure a supplementary distance perpendicular to the supplementary reference surface (552), and **in that** the control unit (156, 356) is connected to the supplementary sensor (554) and is configured to detect a deviation in the supplementary distance measured by the supplementary sensor (554) with respect to a third tolerance band.
